# EUROPÄISCHE PATENTANMELDUNG

(11) **EP 3 300 200 A1**
(43) Veröffentlichungstag der Anmeldung: **28.03.2018**
(21) Anmeldenummer: 17188996.7
(22) Anmeldetag: 01.09.2017
(51) Int. Cl.: H02H 3/08, H02H 7/122

(54) **SCHUTZEINRICHTUNG EINES WECHSELRICHTERS FÜR EINE ELEKTRISCH ANGETRIEBENE MOBILE ARBEITSMASCHINE**

(30) Priorität: 23.09.2016 DE 102016117996
(71) Anmelder: STILL GmbH, 22113 Hamburg (DE)
(72) Erfinder: Wang, Jianqi, 22143 Hamburg (DE)
(74) Vertreter: Patentship Patentanwaltsgesellschaft mbH

(57) **Zusammenfassung**

Die Erfindung betrifft eine Schutzeinrichtung eines Wechselrichters (6) für eine elektrisch angetriebene mobile Arbeitsmaschine, insbesondere Flurförderzeug, der von einem Gleichspannungskreis (5), insbesondere eines Gleichspannungszwischenkreises, gespeist ist und eine mehrphasige, insbesondere dreiphasige, Drehfeldmaschine (7) versorgt, wobei der Wechselrichter (6) für jede Motorphase (13; 17; 20) mit zwei Leistungsschaltern (11, 12; 15, 16; 18, 19) versehen ist und wobei der Wechselrichter (6) mit einer Schutzeinrichtung (25) versehen ist. Die Schutzeinrichtung (25) weist eine Überstromermittlungseinrichtung (26) aufweist, die einen Überstrom des Gleichspannungskreises (5) ermittelt und einen Hauptschütz (10) und/oder die Leistungsschalter (11, 12; 15, 16; 18, 19) ansteuert.

## Beschreibung

Die Erfindung betrifft eine Schutzeinrichtung eines Wechselrichters für eine elektrisch angetriebene mobile Arbeitsmaschine, insbesondere Flurförderzeug, der von einem Gleichspannungskreis, insbesondere eines Gleichspannungszwischenkreises, gespeist ist und eine mehrphasige, insbesondere dreiphasige, Drehfeldmaschine versorgt, wobei der Wechselrichter für jede Motorphase mit zwei Leistungsschaltern versehen ist und wobei der Wechselrichter mit einer Schutzeinrichtung versehen ist.

Bei elektrisch angetriebene mobile Arbeitsmaschine, beispielsweise elektrisch oder verbrennungsmotorisch-elektrisch betriebenen Flurförderzeugen ist eine elektrische Leistungsübertragung für den Fahrantrieb bekannt, bei der ein von dem Verbrennungsmotor, z.B. einem Dieselmotor, angetriebener Generator einen elektrischen Gleichspannungskreis, beispielsweis einen Gleichspannungszwischenkreis, speist, aus dem ein Fahrantriebsmotor gespeist wird. In der Regel ist der Fahrantriebsmotor eine Drehfeldmaschine, beispielsweise eine Asynchronmaschine, die über einen Wechselrichter aus dem Gleichspannungskreis versorgt wird. Der Wechselrichter wandelt die Gleichspannung des Gleichspannungskreises in mehrphasigen, beispielsweise dreiphasigen, Drehstrom zur Versorgung der Drehfeldmaschine um.

Bei bekannten Wechselrichtern ist eine Schutzeinrichtung vorgesehen, die einen Kurzschlusszustand des Wechselrichters überwacht, um die Arbeitsmaschine vor weiteren Schäden zu schützen.

Hierzu ist es bekannt, dass die Schutzeinrichtung mit entsprechenden Stromsensoren direkt die Ströme in den Motorphasen misst. Hierbei werden die zwei oder drei Motorphasenströme des Wechselrichters mittels entsprechender Stromsensoren gemessen und zur Überwachung eines Kurzschlusses oder einer Überlast des Wechselrichters verwendet. Mit einer derartigen Schutzeinrichtung können jedoch nur die Kurschlüsse zwischen den verschiedenen Motorphasen oder die Kurzschlüsse zwischen den Motorhasen und einer Masse entdeckt werden. Kurzschlüsse einer Brücke des Wechselrichters oder Kurzschlüsse aufgrund eines Defektes eines Kondensators des Gleichspannungskreises können mit einer derartigen Schutzeinrichtung nicht erkannt werden.

Weiterhin ist es bereits bekannt, dass die Schutzeinrichtung direkt die Leistungsschalterspannungen der Leistungsschalter des Wechselrichters im eingeschalteten Zustand misst. Mit einer derartigen Schutzeinrichtung kann ein Kurzschluss in den Brücken des Wechselrichters erkannt werden. Eine derartige Schutzeinrichtung weist jedoch eine aufwändige Schaltung auf, um die Leistungsschalterspannungen der einzelnen Leistungsschalter in deren eingeschalteten Zustand messen zu können. Zudem ergeben sich Probleme hinsichtlich der Messung der Leistungsschalterspannungen, wenn die Leistungsschalter nur für kurze Zeit geschaltet sind. Weiterhin ist bei einer derartigen Schutzeinrichtung nachteilig, dass ein Kurzschluss aufgrund eines Defektes eines Kondensators des Gleichspannungskreises nicht erkannt werden kann.

Weiterhin ist es bereits bekannt, als Schutzeinrichtung eine elektrische Sicherung vorzusehen, die im Falle eines Kurzschlusses anspricht und die Arbeitsmaschine vor Schäden schützt. Derartige Sicherungen weisen jedoch als Nachteil eine zu lange Reaktionszeit auf.

Der vorliegenden Erfindung liegt die Aufgabe zugrunde, eine Schutzeinrichtung eines Wechselrichters für eine elektrisch angetriebene mobile Arbeitsmaschine, insbesondere Flurförderzeug, zur Verfügung zu stellen, die die oben genannten Nachteile nicht aufweist.

Diese Aufgabe wird erfindungsgemäß dadurch gelöst, dass die Schutzeinrichtung eine Überstromermittlungseinrichtung aufweist, die einen Überstrom des Gleichspannungskreises ermittelt und einen Hauptschütz und/oder die Leistungsschalter ansteuert. Die erfindungsgemäße Schutzeinrichtung ist somit als Überstromschutzeinrichtung ausgebildet, die einen Überstrom des Gleichspannungskreises ermittelt und einen Hauptschütz und/oder die Leistungsschalter ansteuert. Die erfindungsgemäße Schutzeinrichtung ermöglicht es, einen Kurzschluss einer Brücke des Wechselrichters und eine Kurzschluss aufgrund eines Defektes eines Kondensators des Gleichspannungskreises zu erfassen, so dass die erfindungsgemäße Schutzeinrichtung sowohl vor einem Kurzschluss einer Brücke des Wechselrichters als auch vor einem Kurzschluss aufgrund eines Defektes eines Kondensators des Gleichspannungskreises schützt.

Gemäß einer vorteilhaften Ausgestaltungsform der Erfindung erfasst die Überstromermittlungseinrichtung mit einer Strommessung den Strom des Gleichspannungskreises. Dies kann mit geringem Bauaufwand mit einem Stromsensor als Strommessung erfolgen, der den Strom und somit die Stromstärke in dem Gleichspannungskreis misst.

Die Überstromermittlungseinrichtung ist gemäß einer vorteilhaften Weiterbildung der Erfindung derart ausgebildet, dass beim Ermitteln eines zu hohen Stromes des Gleichspannungskreises der Hauptschütz geöffnet und/oder die Leistungsschalter gesperrt werden. Dadurch kann auf einfache und schnelle Weise die Arbeitsmaschine vor weiteren Schäden geschützt werden.

Gemäß einer vorteilhaften Weiterbildung der Erfindung ist der Gleichspannungskreis mit einem Kondensator versehen. Die erfindungsgemäße Schutzeinrichtung ermöglicht es auch, einen Kurzschluss aufgrund eines Defektes des Kondensators des Gleichspannungskreises zu ermitteln und durch Öffnen des Hauptschütz und/oder Sperren der Leistungsschalter die Arbeitsmaschine vor weiteren Schäden zu schützen.

Zweckmäßigerweise ist der Gleichspannungskreis mit einer elektrischen Sicherung versehen.

Weitere Vorteile und Einzelheiten der Erfindung werden anhand des in den schematischen Figuren dargestellten Ausführungsbeispiels näher erläutert. Hierbei zeigt
- Figur 1: eine schematische Darstellung eines Antriebsstranges einer elektrisch betriebenen Arbeitsmaschine und
- Figur 2: schematisch einen Wechselrichter mit einer erfindungsgemäßen Schutzeinrichtung.

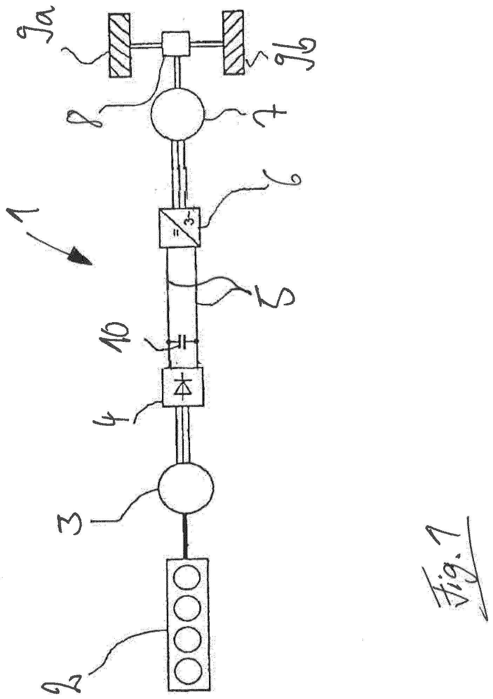

In der Figur 1 ist schematisch der Aufbau eines Antriebsstranges 1 einer elektrisch betriebenen, beispielsweise verbrennungsmotorisch-elektrisch betriebenen, Arbeitsmaschine, beispielsweise eines Flurförderzeugs, dargestellt. Der Antriebsstrang 1 umfasst einen Verbrennungsmotor 2, der einen als Synchrongenerator ausgebildeten Generator 3 antreibt. Der von dem Generator 3 erzeugte Drehstrom wird in einem Gleichrichter 4 gleichgerichtet und einem Gleichspannungskreis 5, im dargestellten Ausführungsbeispiel einem Gleichspannungszwischenkreis, zugeführt. Ein Wechselrichter 6 ist von dem Gleichspannungszwischenkreis 5 gespeist und bildet aus der Gleichspannung des Gleichspannungszwischenkreises 5 einen mehrphasigen, im dargestellten Ausführungsbeispiel, dreiphasigen Drehstrom variabler Frequenz, mit dem eine Drehfeldmaschine 7 versorgt wird. Die Drehfeldmaschine 7 ist im dargestellten Ausführungsbeispiel als Fahrantriebsmotor ausgebildet, der über ein Differentialgetriebe 8 zwei Antriebsräder 9a, 9b der Arbeitsmaschine antriebt. Der Gleichspannungskreis 5 ist mit einem Kondensator 10 versehen, der als Eingangsfilter dient.

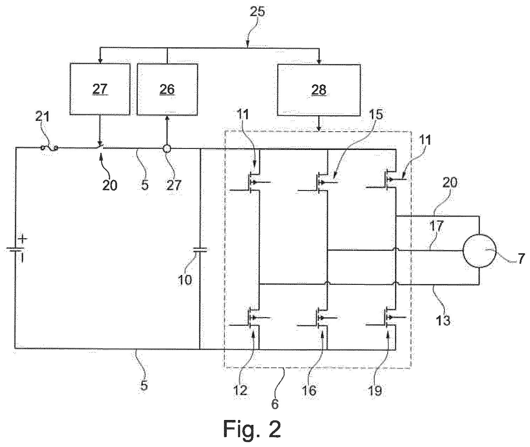

In der Figur 2 ist ein Ausschnitt der Figur 1 in einer vergrößerten Darstellung dargestellt.

Die Figur 2 zeigt den Wechselrichter 6, der von dem Gleichspannungskreis 5 gespeist ist und die Drehfeldmaschine 7 versorgt. Der Wechselrichter 6 weist für jede der drei Motorphasen der Drehfeldmaschine 7 je zwei Leistungsschalter auf. Der Wechselrichter 6 weist zwei Leistungsschalter 11, 12 auf, die eingangsseitig an den Gleichspannungskreis 5 angeschlossen sind und ausgangsseitig an eine erste Motorphase 13 der Drehfeldmaschine 7 angeschlossen sind. Der Wechselrichter 6 weist zwei weitere Leistungsschalter 15, 16 auf, die eingangsseitig an den Gleichspannungskreis 5 angeschlossen sind und ausgangsseitig an eine zweite Motorphase 17 der Drehfeldmaschine 7 angeschlossen sind. Der Wechselrichter 6 weist zwei weitere Leistungsschalter 18, 19 auf, die eingangsseitig an den Gleichspannungskreis 5 angeschlossen sind und ausgangsseitig an eine dritte Motorphase 20 der Drehfeldmaschine 7 angeschlossen sind.

Die beiden Leistungsschalter 11, 12 bzw. 15, 16 bzw. 18, 19 einer Motorphase 13 bzw. 17 bzw. 20 bilden jeweils eine Brücke des Wechselrichters 6.

In der Figur 2 ist weiterhin der Kondensator 10 des Gleichspannungskreises 5 gezeigt.

Der Gleichspannungskreis 5 ist weiterhin mit einem Hauptschütz 20 versehen.

Im dargestellten Ausführungsbeispiel ist der Gleichspannungskreis 5 zusätzlich mit einer elektrischen Sicherung 21 versehen.

Erfindungsgemäß ist eine Schutzeinrichtung 25 für den Wechselrichter 6 und den Gleichspannungskreis 5 vorgesehen. Die Schutzeinrichtung 25 schützt die Arbeitsmaschine im Falle eines im Wechselrichter 6 auftretenden Kurzschlusses und/oder einer Überlastung des Wechselrichters 6 vor weiteren Schäden.

Die erfindungsgemäße Schutzeinrichtung 25 umfasst eine Überstromermittlungseinrichtung 26, die mit einer Strommessung 27 einen Überstrom des Gleichspannungskreises 5 ermittelt und den Hauptschütz 20 und/oder die Leistungsschalter 11, 12, 15, 16, 18, 19 ansteuert.

Die Überstromermittlungseinrichtung 26 weist eine Strommessung 27 auf, die den Strom (Gleichstrom) und somit die Stromstärke des Gleichspannungskreises 5 misst und eingangsseitig mit der Überstromermittlungseinrichtung 26 in Verbindung steht. Die Überstromermittlungseinrichtung 26 steht ausgangsseitig mit einer Hauptschützansteuerung 27 in Verbindung, mit der der Hauptschütz 10 geöffnet werden kann, und einer Leistungsschaltersperreinrichtung 28 in Verbindung, mit der die Leistungsschalter 11, 12, 15, 16, 18, 19 des Wechselrichters 6 gesperrt werden können.

Die Strommessung 27 kann von einem Stromsensor gebildet sein, der den Strom (Gleichstrom) des Gleichspannungskreises 5 misst. Mit der Strommessung 27 wird der Strom (Gleichstrom) des Gleichspannungskreises 5 gemessen. Mittels des gemessenen Stroms kann der Strom (Gleichstrom) des Gleichspannungskreises 5 in beiden Richtungen überwacht werden. Die Überstromermittlungseinrichtung 26 vergleicht den mit der Strommessung 27 gemessenen Strom des Gleichspannungskreises 5 mit einem Grenzwert und erzeugt im Fall, dass der Grenzwert überschritten wird, d.h. ein zu hoher Strom im Gleichspannungskreis 5 gemessen wird, ein entsprechendes Signal, beispielsweise ein digitales Signal, das an die Hauptschützansteuerung 27 und die Leistungsschaltersperreinrichtung 28 ausgegeben wird, um den Hauptschütz 10 zu öffnen und die Leistungsschalter 11, 12, 15, 16, 18, 19 des Wechselrichters 6 zu sperren. Durch das Öffnen des Hauptschützes 10 und Sperren der Leistungsschalter 11, 12, 15, 16, 18, 19 des Wechselrichters 6 wird die Arbeitsmaschine vor weiteren Schäden geschützt.

Die erfindungsgemäße, als Überrstromschutzeinrichtung ausgebildete Schutzeinrichtung 25 weist eine Reihe von Vorteilen auf.

Die erfindungsgemäße Schutzeinrichtung 25 weist einen einfachen und robusten Aufbau auf, die mit wenigen zusätzlichen Bauelementen in einem Wechselrichter 6 realisiert werden kann.

Mit der erfindungsgemäße Schutzeinrichtung 25 kann nicht nur ein Kurzschluss in den Brücken des Wechselrichters 6 erkannt werden, sondern auch ein Kurzschluss aufgrund eines Defektes des Kondensators 10 des Gleichspannungskreises 5, so dass mit der erfindungsgemäßen Schutzeinrichtung 25 nicht nur vor einem Kurzschluss in den Brücken des Wechselrichters 6, sondern auch vor einem Kurzschluss aufgrund eines Defektes des Kondensators 10 des Gleichspannungskreises 5 geschützt werden kann. Die erfindungsgemäße Schutzeinrichtung 25 arbeitet aufgrund der Strommessung 27 und der Überstromermittlung des Gleichspannungskreises 5 auch bei allen Pulsbreiten eines Wechselrichters 6 mit Pulsweitenmodulation. Im Vergleich zu einem Schutz durch eine elektrische Sicherung weist die erfindungsgemäße Schutzeinrichtung 25 eine deutlich kürzere Reaktionszeit auf. Die erfindungsgemäße Schutzeinrichtung 25 kann bei Wechselrichtern 6 eingesetzt werden, bei denen die Leistungsschalter 11, 12, 15, 16, 18, 19 von üblichen Zweipunkt-Wechselrichterventilen gebildet sind, beispielswiese GTO-Thyristoren oder IGBTs oder MOSFETs, da die erfindungsgemäße Schutzeinrichtung 25 unabhängig von der Ausführung der Leistungsschalter 11, 12, 15, 16, 18, 19 arbeitet und für alle üblichen Zweipunkt-Wechselrichterventilen eingesetzt werden kann, beispielswiese GTO-Thyristoren oder IGBTs oder MOSFETs.

## Patentansprüche

1. Schutzeinrichtung (25) eines Wechselrichters (6) für eine elektrisch angetriebene mobile Arbeitsmaschine, insbesondere Flurförderzeug, der von einem Gleichspannungskreis (5), insbesondere eines Gleichspannungszwischenkreises, gespeist ist und eine mehrphasige, insbesondere dreiphasige, Drehfeldmaschine (7) versorgt, wobei der Wechselrichter (6) für jede Motorphase (13; 17; 20) mit zwei Leistungsschaltern (11, 12; 15, 16; 18, 19) versehen ist und wobei der Wechselrichter (6) mit einer Schutzeinrichtung (25) versehen ist, **dadurch gekennzeichnet, dass** die Schutzeinrichtung (25) eine Überstromermittlungseinrichtung (26) aufweist, die einen Überstrom des Gleichspannungskreises (5) ermittelt und einen Hauptschütz (10) und/oder die Leistungsschalter (11, 12; 15, 16; 18, 19) ansteuert.

2. Schutzeinrichtung nach Anspruch 1, **dadurch gekennzeichnet, dass** die Überstromermittlungseinrichtung (26) mit einer Strommessung (27) den Strom des Gleichspannungskreises (5) erfasst.

3. Schutzeinrichtung nach Anspruch 1 oder 2, **dadurch gekennzeichnet, dass** die Überstromermittlungseinrichtung (26) derart ausgebildet ist, dass beim Ermitteln eines zu hohen Stromes des Gleichspannungskreises (5) der Hauptschütz (10) geöffnet und/oder die Leistungsschalter (11, 12; 15, 16; 18, 19) gesperrt werden.

4. Schutzeinrichtung nach einem der Ansprüche 1 bis 3, **dadurch gekennzeichnet, dass** der Gleichspannungskreis (5) mit einem Kondensator (10) versehen ist.

5. Schutzeinrichtung nach einem der Ansprüche 1 bis 4, **dadurch gekennzeichnet, dass** der Gleichspannungskreis (5) mit einer elektrischen Sicherung (21) versehen ist.
